# EUROPEAN PATENT APPLICATION

(11) **EP 4 578 635 A1**
(43) Date of publication of application: **02.07.2025**
(21) Application number: 23857153.3
(22) Date of filing: 04.08.2023
(51) Int. Cl.: B29C 64/40, B29C 64/112, B33Y 10/00, B33Y 70/00

(54) **METHOD FOR MANUFACTURING THREE-DIMENSIONAL SHAPED ARTICLE AND INSET FOR PRODUCTION OF THREE-DIMENSIONAL SHAPED ARTICLE**

(30) Priority: 26.08.2022 JP 2022135026
(71) Applicant: OSAKA UNIVERSITY, Suita-shi Osaka 565-0871 (JP); NAGASE CHEMTEX CORPORATION, Osaka-shi, Osaka 550-8668 (JP)
(72) Inventor: SAKAI, Shinji, Suita-shi, Osaka 565-0871 (JP); KOTANI, Takashi, Suita-shi, Osaka 565-0871 (JP); NAGANO, Toyohiro, Tatsuno-shi, Hyogo 679-4124 (JP); NAKAMURA, Daisuke, Tatsuno-shi, Hyogo 679-4124 (JP)
(74) Representative: Klöckner, Christoph
(86) International application number: PCT/JP2023/028503
(87) International publication number: WO 2024/043039

(57) **Abstract**

Provided are a method for producing a three-dimensional object and an ink set for producing a three-dimensional object, which can produce even, for example, a complex-shaped three-dimensional object made of a soft material with good fabrication accuracy. The present invention relates to a method for producing a three-dimensional object, including individually discharging (a) a model material ink containing a photocrosslinkable polymer and (b) a support material ink containing a support material and a first crosslinking factor, photocuring the discharged photocrosslinkable polymer, and removing an object of the support material **ink.**

## Description

### TECHNICAL FIELD

The present invention relates to a method for producing a three-dimensional object and an ink set for producing a three-dimensional object. The present invention particularly relates to a method for producing a three-dimensional object, which is suitable for producing a complex-shaped three-dimensional object made of a soft material in regenerative medicine and other fields.

### BACKGROUND ART

Technologies for producing three-dimensional objects using fabrication devices called 3D printers have been studied with a view to practical use in various fields. For example, in the field of regenerative medicine, there is a need to produce complex-shaped three-dimensional objects with bridges or holes made of soft materials for use as artificial organs. When trying to produce such a three-dimensional object from a bioink using a 3D printer, the bioink may flow out (drip), resulting in collapse before gelling, or deformation may occur under gravity. Thus, there is a need for improved fabrication accuracy.

Patent Literature 1 discloses that, with a view to application in regenerative medicine and other fields, a silk nanofiber may be added to an ink for 3D printing systems containing a natural polymer and/or a synthetic polymer to allow the ink to have a low viscosity when discharged from a nozzle so that it can be discharged at a lower pressure, and also to allow the ink to have a high viscosity on the printed substrate so that deformation of the object can be sufficiently prevented. Meanwhile, there has been a desire to further expand the range of materials and develop new methods for producing three-dimensional objects.

### CITATION LIST

### - Patent Literature

Patent Literature 1: JP 2020-156357 A

### SUMMARY OF INVENTION

### - Technical Problem

The present invention aims to provide a method for producing a three-dimensional object and an ink set for producing a three-dimensional object, which can produce even, for example, a complex-shaped three-dimensional object made of a soft material with good fabrication accuracy.

### - Solution to Problem

As a result of extensive studies, the present inventors have found that even, for example, a complex-shaped three-dimensional object made of a soft material can be produced with good fabrication accuracy when the three-dimensional object is fabricated by individually discharging a model material ink containing a photocrosslinkable polymer and a support material ink containing a support material and a crosslinking factor, photocuring the discharged photocrosslinkable polymer, and removing an object of the support material ink.

Specifically, Embodiment 1 of the present invention relates to a method for producing a three-dimensional object, including:
individually discharging (a) a model material ink containing a photocrosslinkable polymer and (b) a support material ink containing a support material and a first crosslinking factor;
photocuring the discharged photocrosslinkable polymer; and
removing an object of the support material ink.

Embodiment 2 of the present invention relates to the method for producing a three-dimensional object according to Embodiment 1 of the present invention, wherein the model material ink (a) further contains a second crosslinking factor.

Embodiment 3 of the present invention relates to the method for producing a three-dimensional object according to Embodiment 1 or 2 of the present invention, wherein the model material ink (a) is substantially free of photopolymerization initiators.

Embodiment 4 of the present invention relates to the method for producing a three-dimensional object according to any one of Embodiments 1 to 3 of the present invention, wherein the support material ink (b) is substantially free of photocrosslinkable polymers or photocrosslinkable monomers.

Embodiment 5 of the present invention relates to the method for producing a three-dimensional object according to any one of Embodiments 1 to 4 of the present invention, wherein the support material ink (b) further contains a second crosslinking factor.

Embodiment 6 of the present invention relates to the method for producing a three-dimensional object according to any one of Embodiments 1 to 5 of the present invention, wherein the support material is a water-soluble polymer or a water-dispersible polymer.

Embodiment 7 of the present invention relates to the method for producing a three-dimensional object according to Embodiment 6 of the present invention, wherein the water-soluble polymer or water-dispersible polymer is capable of forming an aqueous gel that can interact with an ionic compound to aggregate or reduce its viscosity, and the step of removing an object of the support material ink includes removing the object of the support material ink (b) by interaction with the ionic compound.

Embodiment 8 of the present invention relates to an ink set for producing a three-dimensional object, the ink set including:
(a) a model material ink containing a photocrosslinkable polymer; and
(b) a support material ink containing a support material and a first crosslinking factor.

Embodiment 9 of the present invention relates to the ink set for producing a three-dimensional object according to Embodiment 8 of the present invention, wherein the support material ink (b) contains a water-soluble polymer or water-dispersible polymer which is capable of forming an aqueous gel that can interact with an ionic compound to aggregate or reduce its viscosity.

### - Advantageous Effects of Invention

The present invention can produce even, for example, a complex-shaped three-dimensional object made of a soft material with good fabrication accuracy by light irradiation.

### BRIEF DESCRIPTION OF DRAWINGS

FIG. 1 shows schematic diagrams illustrating steps for producing a three-dimensional object with a bridge by a method for producing a three-dimensional object of the present invention.

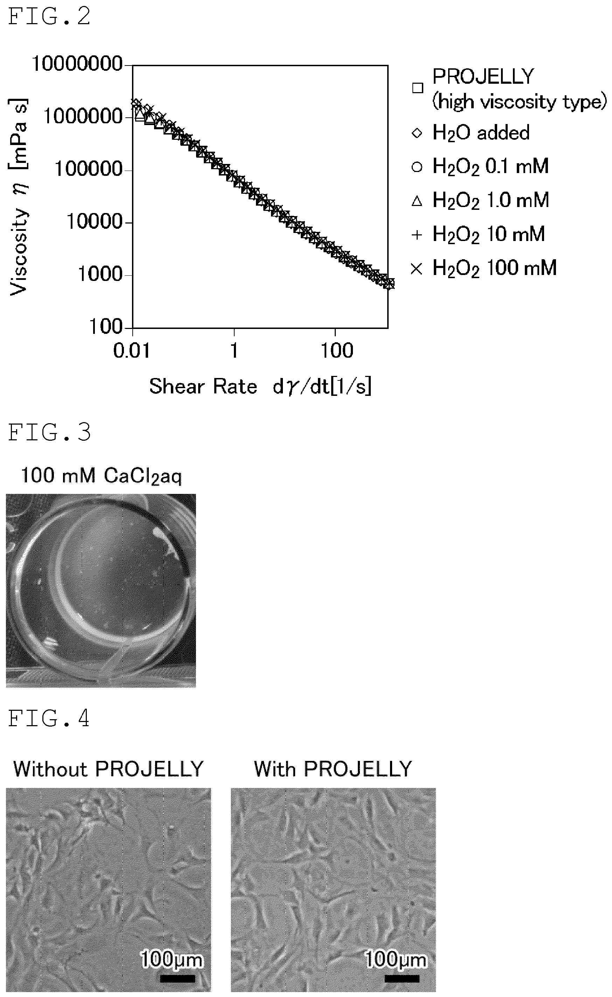

FIG. 2 shows a graph of viscosity versus shear rate for support material inks prepared in Production Example 2.
FIG. 3 shows a photograph of white precipitates formed when PROJELLY used in Production Example 2 was allowed to interact with an ionic compound.
FIG. 4 shows photographs illustrating cell growth observed when cells were proliferated in Dulbecco's modified Eagle medium (DMEM medium) containing PROJELLY used in Production Example 2.
FIG. 5 shows photographs of three-dimensional objects produced in Example 1 and Comparative Example 1.
FIG. 6 shows photographs of three-dimensional objects produced in Example 2 and Comparative Examples 2 and 3.
FIG. 7 shows photographs of a three-dimensional object produced in Example 3.
FIG. 8 shows photographs of a three-dimensional object produced in Example 4.
FIG. 9 shows photographs of a three-dimensional object produced in Example 5.
FIG. 10 shows a photograph of a three-dimensional object produced and cultured in Example 6.
FIG. 11 shows schematic diagrams illustrating steps for producing a three-dimensional object further using a second support material ink in a method for producing a three-dimensional object of the present invention.
FIG. 12 shows schematic diagrams illustrating another example of the steps illustrated in FIG. 11.
FIG. 13 shows schematic diagrams illustrating yet another example of the steps illustrated in FIG. 11.

### DESCRIPTION OF EMBODIMENTS

### <<Method for producing three-dimensional object>>

The method for producing a three-dimensional object according to the present invention includes individually discharging (a) a model material ink containing a photocrosslinkable polymer and (b) a support material ink containing a support material and a first crosslinking factor, photocuring the discharged photocrosslinkable polymer, and removing an object of the support material ink.

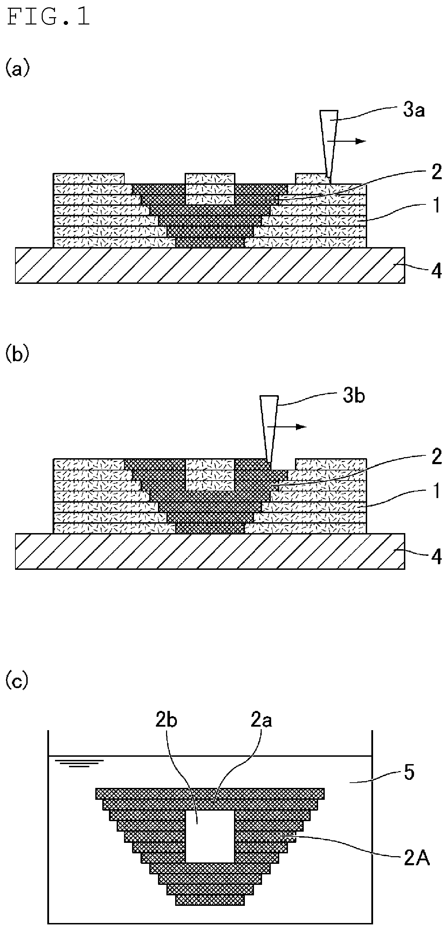

The method for producing a three-dimensional object of the present invention is briefly described below with reference to FIG. 1. FIG. 1 shows schematic diagrams illustrating steps for producing a three-dimensional object with a bridge by the method for producing a three-dimensional object of the present invention. FIG. 1(a) schematically shows discharge of a support material ink 1 from a nozzle 3a of a 3D printer. FIG. 1(b) schematically shows discharge of a model material ink 2 from a nozzle 3b of the 3D printer. It should be noted that the nozzle 3a and the nozzle 3b may be the same nozzle but are preferably different nozzles. Here, the support material ink 1 is discharged, and then the model material ink 2 is discharged to a location surrounded by the support material ink 1, whereby one layer is formed. This process is repeated to provide a layered structure.

As shown in FIG. 1(a) and FIG. 1(b), the discharged support material ink 1 and the discharged model material ink 2 are in contact with each other. For example, when the support material ink 1 contains a first crosslinking factor together with a support material, the first crosslinking factor may be supplied from the discharged support material ink 1 to the discharged model material ink 2 to crosslink the photocrosslinkable polymer in the discharged model material ink 2 with light, causing the model material ink 2 to gel. FIG. 1(c) shows the step of immersing, after completion of the gelling of the model material ink 2, the resulting objects in a solution 5 for removing the object of the support material ink 1 to remove the objects of the support material ink 1. By removing the objects of the support material ink 1, even a complex-shaped three-dimensional object 2A (object of the model material ink) with a bridge 2a and a hole 2b can be produced.

In the method for producing a three-dimensional object of the present invention, a three-dimensional object may be produced by discharging the model material ink and the support material ink into a circular cylindrical vessel such as a beaker or a petri dish, a rectangular cylindrical vessel, or a vessel of any other shape. The inner wall of the vessel serves as a support for the model material ink and/or the support material ink, enabling the production of a taller object. Here, the vessel may be made of any material that can serve as a support for the model material ink and/or the support material ink, and may be made of glass, resin, or the like. Moreover, the vessel may be produced by three-dimensional fabrication.

### <Step of individually discharging (a) model material ink containing photocrosslinkable polymer and (b) support material ink containing support material and first crosslinking factor>

In the discharging step, for example, the model material ink (a) and the support material ink (b) containing a support material and a first crosslinking factor may be discharged from a nozzle of a 3D printer onto a target site on a substrate or the like. When a 3D printer is used in the ink discharging step, the 3D printer may be of any type such as an inkjet, laser, or extrusion 3D printer, but is preferably an extrusion 3D printer. The nozzle for discharging the model material ink (a) is preferably different from the nozzle for discharging the support material ink (b).

### ((a) Model material ink containing photocrosslinkable polymer)

The model material ink (a) contains a photocrosslinkable polymer and can become a gel when the photocrosslinkable polymer is crosslinked with light by the first crosslinking factor contained in the support material ink. Non-limiting examples of the photocrosslinkable polymer include polymers obtained by binding a polymer base material with a phenolic hydroxy group-containing compound; polymers having a (meth)acrylate group such as gelatin methacrylate; amino group-containing polysaccharides; and polyphenols. In the case of a polymer base material having a photocrosslinkable functional group, the polymer base material may be used directly as a photocrosslinkable polymer or may be further bonded to a phenolic hydroxy group-containing compound or the like to introduce a photocrosslinkable functional group before use.

Non-limiting examples of the polymer base material include polysaccharides, nucleic acids, carbohydrates, proteins, polypeptides, poly(α-hydroxy acids), polylactones, polyamino acids, polyanhydrides, polyorthoesters, poly(anhydride-co-imides), polyorthocarbonates, poly(α-hydroxyalkanoates), polydioxanones, polyphosphoesters, polylactic acid, poly(L-lactide) (PLLA), poly(D,L-lactide) (PDLLA), polyglycolic acid, polyglycolide (PGA), poly(lactide-co-glycolide) (PLGA), poly(L-lactide-co-D,L-lactide), poly(D,L-lactide-co-trimethylene carbonate), polyhydroxybutyrate (PHB), poly(ε-caprolactone), poly(δ-valerolactone), poly(γ-butyrolactone), polycaprolactone, poly(meth)acrylic acid, polycarboxylic acids, polyallylamine hydrochloride, polydiallyldimethylammonium chloride, polyalkyleneimines such as polyethyleneimine, polypropylene fumarate, polyvinyl alcohol, polyvinylpyrrolidone, polyalkylenes such as polyethylene, polymethyl methacrylate, carbon fibers, polyalkylene glycols such as polyethylene glycol, polyalkylene oxides such as polyethylene oxide, polyvinyl alcohol, polyvinylpyrrolidone, polyethyloxazoline, poly(ethylene oxide)-co-poly(propylene oxide) block copolymers, poly(ethylene terephthalate) polyamides, and salts of these polymer base materials.

Examples of the polysaccharides include cellulose, hemicellulose, dextran, hyaluronic acid, chitin, chitosan, alginic acid, chondroitin sulfate, starch, pullulan, carrageenan, curdlan, fucoidan, amylose, amylopectin, pectin, salts such as alkali metal salts thereof, and derivatives thereof. Examples of the derivatives of the polysaccharides include carboxymethylcellulose, methylcellulose, deacetylated chitins, and deacetylated chitosans.

Examples of the proteins include simple proteins such as albumin, globulin, prolamin, glutelin, histone, protamine, and scleroproteins, e.g., fibroin; complex proteins such as nucleoproteins, glycoproteins, chromoproteins, and phosphoproteins; and derived proteins such as gelatin, proteose, and peptone.

Non-limiting examples of the salts in the salts of the polymer base materials include acid addition salts, metal salts, ammonium salts, and organic amine salts. Examples of the acid addition salts include inorganic acid salts such as hydrochlorides, sulfates, and phosphates; and organic acid salts such as acetates, maleates, fumarates, tartrates, and citrates. Examples of the metal salts include alkali metal salts such as sodium salts and potassium salts, alkaline earth metal salts such as calcium salts, magnesium salts, aluminum salts, and zinc salts. Examples of the organic amine salts include salts of morpholine, piperidine, or the like.

Preferred among the polymer base materials are polysaccharides and proteins because they are easily available and can provide good properties to the resulting three-dimensional object. Polysaccharides are more preferred. The polymer base materials mentioned above may be used alone or in combinations of two or more.

The phenolic hydroxy group-containing compound is not particularly limited, but is preferably a compound represented by the following formula (1): 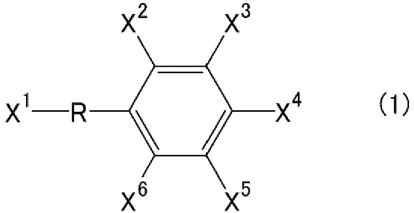 wherein X¹ represents a hydroxy group, an amino group, or a carboxylic acid (salt) group; one or two of X² to X⁶ represent hydroxy groups, and the rest each represent a hydrogen atom or a C1-C6 alkoxy group; when two of X² to X⁶ represent hydroxy groups, the two hydroxy groups are preferably ortho or para to each other; and R represents a C1-C10 divalent hydrocarbon group that optionally has a substituent. A crosslinkable polymer obtained by introducing a phenolic hydroxy group into a polymer base material can be easily crosslinked by exposure to light in the presence of a photoredox catalyst and a polymerization initiator or a photopolymerization initiator. To facilitate the introduction of a phenolic hydroxy group into a polymer base material, X¹ is preferably a carboxylic acid (salt) group or an amino group, more preferably an amino group. Here, the amino group is preferably a primary amino group or a secondary amino group. The carboxylic acid (salt) group is preferably a carboxylic acid group or an alkali metal salt or alkaline earth metal salt of a carboxylic acid group. Moreover, the number of carbons of the divalent hydrocarbon group represented by R is preferably 1 to 8, more preferably 1 to 6. Non-limiting examples of the divalent hydrocarbon group represented by R include alkylene and alkylalkylene groups. Moreover, examples of the optional substituent of R include amide, ester, and ether groups. Here, when X¹ is a hydroxy group, it is an alcoholic hydroxy group.

Examples of the phenolic hydroxy group-containing compound include compounds having one phenolic hydroxy group, such as tyramine, homovanillic acid, and derivatives thereof, and compounds having two phenolic hydroxy groups, such as catecholamines (e.g., dopamine, noradrenaline, and adrenaline). From the perspective of the crosslinking reactivity of the resulting crosslinkable polymer, compounds having one phenolic hydroxy group are preferred among these. More preferred are tyramine or tyramine derivatives.

The phenolic hydroxy group-containing compound may be a commercial product, for example, tyramine hydrochloride (4-(2-aminoethyl)phenol hydrochloride, product number: T2879, available from Sigma-Aldrich).

The polymer base material and the phenolic hydroxy group-containing compound may be bound by any method, such as by condensing the functional group that may be contained in the phenolic hydroxy group-containing compound, such as a carboxy group, an amino group, or an alcoholic hydroxy group, with the functional group that may be contained in the polymer base material, such as an amino group, a carboxy group, or a thiol group, using a condensing agent or glutamyl transferase.

Non-limiting examples of the condensing agent include 1,1-carbonyldiimidazole, dicyclohexylcarbodiimide, and 3-(3-dimethylaminopropyl)-1-ethylcarbodiimide hydrochloride (water-soluble carbodiimide: WSCD·HCl). In the method of condensing the polymer base material and the phenolic hydroxy group-containing compound using the condensing agent or glutamyl transferase, the conditions such as pH, polymer base material concentration, reaction temperature, and solvent can be appropriately selected depending on the properties of the polymer base material, phenolic hydroxy group-containing compound, and condensing agent or glutamyl transferase used.

The percentage of introduction (or modification) of the phenolic hydroxy group-containing compound relative to the polymer base material is the percentage of condensation-reacted (modified) groups based on all the condensation-reactive groups of the polymer base material. From the perspective of achieving a good balance between gelling rate and hardness (being not too hard), the percentage is preferably 0.3 to 20 mol%, more preferably 1 to 10 mol% relative to 100 mol% of the condensation-reactive groups of the polymer base material.

Usable photocrosslinkable polymers also include amino group-containing polysaccharides and polyphenols. Examples of the amino group-containing polysaccharides include acetylated chitins and chitosans. Moreover, examples of the polyphenols include catechin compounds, anthocyanin compounds, rutin, and natural pigments.

Gelatin methacrylate (gelatin methacryloyl) is obtainable by introducing a methacryloyl group into a side chain of gelatin. An aqueous solution of gelatin methacrylate can form a gel when irradiated in the presence of a photopolymerization initiator with light of a wavelength suitable for the photopolymerization initiator.

The concentration of the photocrosslinkable polymer in the model material ink (a) is usually 0.1 to 30% by weight, preferably 0.5 to 20% by weight, more preferably 0.75 to 10% by weight. If the concentration of the photocrosslinkable polymer is lower than 0.1% by weight, the three-dimensional object may have insufficient strength. If the concentration of the photocrosslinkable polymer is higher than 30% by weight, the model material ink may have too high a viscosity, which may increase the pressure when the ink is discharged from the nozzle, possibly affecting the quality of the model material ink (a). The concentration of the crosslinkable polymer in the model material ink (a) is also usually 0.1 to 30 w/v% (g/100 mL), preferably 0.5 to 20 w/v% (g/100 mL), more preferably 0.75 to 10 w/v% (g/100 mL).

The model material ink (a) in the production method of the present invention preferably further contains a second crosslinking factor. The second crosslinking factor refers to a component which is involved in the crosslinking of the photocrosslinkable polymer together with the first crosslinking factor contained in the support material ink, but which alone does not crosslink the photocrosslinkable polymer, such as a photoredox catalyst. Specific examples include ruthenium complexes such as tris(2,2'-bipyridyl)dichlororuthenium(II) and iridium complexes such as tris(2-phenylpyridine)iridium(III).

The amount of the second crosslinking factor in the model material ink (a) relative to 100 parts by mass of the photocrosslinkable polymer is preferably 0.1 to 50 parts by weight, more preferably 1 to 30 parts by weight. Moreover, the concentration of the second crosslinking factor in the model material ink (a) is not particularly limited, but is preferably at least 0.01 mM but not higher than 1 M. The concentration is more preferably 0.1 mM or higher, still more preferably 1 mM or higher, particularly preferably 5 mM or higher.

The model material ink (a) is preferably substantially free of photopolymerization initiators to prevent the progress of photocrosslinking of the photocrosslinkable polymer in the absence of the support material ink (b). The amount of photopolymerization initiators in the model material ink (a) is preferably 1% by mass or less, more preferably 0.5% by mass or less, still more preferably 0% by mass.

The model material ink (a) may contain other components in addition to the photocrosslinkable polymer and the second crosslinking factor. Examples of such other components include various cells, solvents, chain transfer agents, plasticizers, pH adjusters, buffers, preservatives, solvents, ultraviolet absorbers, coloring materials, and surfactants. Examples of the solvents include water, phosphate-buffered saline (PBS), and mixtures of water and organic solvents. Non-limiting examples of the organic solvents include ethanol, glycerol, and dimethylsulfoxide.

Examples of animals from which the cells are derived include mammals, birds, and reptiles, with mammals being preferred. Examples of the mammals include humans, pigs, cattle, sheep, goats, rabbits, mice, rats, dogs, cats, and chickens, with humans being preferred. Examples of cell types include epithelial cells, fibroblasts, chondrocytes, osteoblasts, smooth muscle cells, nerve cells, and stem cells.

The concentration of cells in the model material ink is not particularly limited, but is preferably 1 × 10³ to 1 × 10⁹ cells/mL, more preferably 1 × 10⁴ to 1 × 10⁷ cells/mL.

The model material ink (a) is preferably liquid at room temperature. Being liquid at room temperature, the model material ink (a) can be easily discharged using a 3D printer or the like. The model material ink (a) may have any viscosity at 20°C, but preferably has a viscosity at 20°C of 10 mPa·s or higher, more preferably 20 mPa·s or higher, still more preferably 50 mPa·s or higher. The viscosity is also preferably 100000 mPa·s or lower, more preferably 10000 mPa·s or lower, still more preferably 2000 mPa·s or lower. Since the production method of the present invention can sufficiently prevent flowing (dripping) of the model material ink (a) before gelling, a model material ink (a) with low viscosity can be suitably used. Here, the viscosity is measured using a cone and plate E-type viscometer at a rotation rate of 20 rpm.

The model material ink (a) can be produced by mixing the above-described photocrosslinkable polymer and second crosslinking factor, and optionally other components.

### ((b) Support material ink containing support material and first crosslinking factor)

The support material ink (b), when discharged, may be crosslinked to retain its shape and form an object, but is conveniently and preferably capable of retaining its shape by itself and directly forming an object. The object of the support material ink (b) can retain the shape of the model material ink (a) until the model material ink (a) is sufficiently gelled, thereby preventing flowing (dripping) of the model material ink (a) or deformation of the model material ink (a) under gravity. After the model material ink (a) is gelled, the object of the support material ink (b) can be removed as described later.

The support material contained in the support material ink (b) is a polymer such as a natural polymer or a synthetic polymer. Examples of the polymer include polysaccharides, nucleic acids, carbohydrates, proteins, polypeptides, polyamino acids, polylactic acid, polyalkylene oxides such as polyethylene oxide, polyalkyleneimines such as polyethyleneimine, polyvinylpyrrolidone, polyalkylene glycols such as polyethylene glycol, polyacrylic acid, polymethacrylic acid, polyglutamic acid, carboxyvinyl polymers, carboxymethylcellulose, methylcellulose, hydroxyethylcellulose, albumin, gelatin, collagen, silk fibroin, polyvinyl alcohol, and salts of these polymers. Preferred among these polymers are polysaccharides, nucleic acids, carbohydrates, proteins, polypeptides, polyamino acids, polylactic acid, polyethylene oxide, polyethyleneimine, polyvinylpyrrolidone, polyethylene glycol, polyacrylic acid, polyglutamic acid, albumin, gelatin, collagen, polyvinyl alcohol, and salts of these polymers. The polysaccharides, the proteins, and the salts in the salts of the polymers are the same as the polysaccharides, the proteins, and the salts in the salts of the polymer base materials, respectively, described for the polymer base material. Moreover, the support material may be obtained by crosslinking any of the above-mentioned polymers with a crosslinker. The support material is preferably not curable by irradiation with light. Specifically, it is preferably free of photocrosslinkable polymers or photocrosslinkable monomers.

Examples of the polysaccharides include cellulose, hemicellulose, dextran, hyaluronic acid, chitin, chitosan, alginic acid, chondroitin sulfate, starch, pullulan, carrageenan, curdlan, fucoidan, amylose, amylopectin, pectin, salts such as alkali metal salts thereof, and derivatives thereof.

In particular, the support material is preferably a water-soluble polymer or a water-dispersible polymer. This enables, in the step of removing the object of the support material ink (b), easy removal of the object under mild conditions using water or an aqueous solution as described later. Herein, the solubility of the water-soluble polymer in 100 g of water at 20°C is not particularly limited, but is preferably 1 g or more, more preferably 5 g or more.

Preferably, the water-soluble polymer or water-dispersible polymer is capable of forming an aqueous polymer gel that can interact with an ionic compound to aggregate or reduce its viscosity. The water-soluble polymer or water-dispersible polymer which is capable of forming an aqueous polymer gel that can interact with an ionic compound to aggregate or reduce its viscosity may be obtained by crosslinking, with a crosslinker, a hydrocarbon chain (e.g., polyacrylic acid) containing an acid group, such as a carboxylic acid group, as a main chain. Non-limiting examples of the crosslinker include allyl sucrose and pentaerythritol. The ionic compound is described later.

From the perspective of further improving the pseudoplasticity of the support material ink (b), the concentration of the polymer in the support material ink (b) is preferably 0.1% by weight or higher, more preferably 0.3% by weight or higher, still more preferably 0.5% by weight or higher, particularly preferably 1.0% by weight or higher. The concentration of the polymer is also preferably 30.0% by weight or lower, more preferably 15.0% by weight or lower, still more preferably 10.0% by weight or lower. Here, when the support material ink (b) contains two or more polymers, the above concentration means the total concentration of all the polymers contained in the support material ink.

The support material ink (b) further contains a first crosslinking factor. The first crosslinking factor refers to a component which, alone or together with the second crosslinking factor contained in the model material ink and/or the support material ink, is involved in the crosslinking of the photocrosslinkable polymer, such as a polymerization initiator. Specific examples include polymerization initiators such as sodium peroxodisulfate (SPS), lithium phenyl-2,4,6-trimethylbenzoylphosphinate (LAP), diphenyl-2,4,6-trimethylbenzoylphosphine oxide, and 2-hydroxy-4-(2-hydroxyethoxy)-2-methylpropiophenone.

The amount of the first crosslinking factor relative to 100 parts by mass of the photocrosslinkable polymer is preferably 0.1 to 50 parts by weight, more preferably 0.5 to 30 parts by weight. Moreover, the concentration of the first crosslinking factor in the support material ink (b) is not particularly limited, but is preferably at least 0.01 mM but not higher than 1 M. The concentration is more preferably 0.1 mM or higher, still more preferably 1 mM or higher, particularly preferably 5 mM or higher.

The support material ink (b) preferably further contains a second crosslinking factor. Specific examples of the second crosslinking factor are as described earlier.

The amount of the second crosslinking factor in the support material ink (b) relative to 100 parts by mass of the photocrosslinkable polymer is preferably 0.1 to 50 parts by weight, more preferably 1 to 30 parts by weight. Moreover, the concentration of the second crosslinking factor in the support material ink (b) is not particularly limited, but is preferably at least 0.01 mM but not higher than 1 M. The concentration is more preferably 0.1 mM or higher, more preferably 1 mM or higher, particularly preferably 5 mM or higher.

The support material ink (b) is preferably substantially free of photocrosslinkable polymers or photocrosslinkable monomers to prevent photocrosslinking of the support material ink alone in order to facilitate the removal of the object of the support material ink. The amount of photocrosslinkable polymers or photocrosslinkable monomers in the support material ink (b) is preferably 1% by mass or less, more preferably 0.1% by mass or less, still more preferably 0% by mass.

The support material ink (b) may contain other components in addition to the polymer as a support material and the first crosslinking factor. Examples of such other components include humectants such as glycerol, pH adjusters such as alkali metal hydroxides and organic amines, preservatives, coloring materials, solvents, plasticizers, ultraviolet absorbers, and surfactants. Examples of the solvents include water, phosphate-buffered saline (PBS), and mixtures of water and organic solvents. Non-limiting examples of the organic solvents include ethanol and glycerol.

The support material ink (b) is preferably liquid or gel-like, more preferably gel-like, at room temperature. Being gel-like at room temperature, the support material ink (b) can be easily fabricated using a 3D printer or the like. The viscosity of the support material ink (b) at a shear rate of 0.01 (1/s) at 20°C is preferably 10000 mPa·s or higher. To retain its shape by itself, the viscosity is more preferably 100000 mPa·s or higher, still more preferably 500000 mPa·s or higher. Moreover, the upper limit of the viscosity is not particularly limited, but the viscosity is usually 10000000 mPa·s or lower.

The viscosity of the support material ink (b) at a shear rate of 10 (1/s) at 20°C is preferably 10 mPa·s or higher, more preferably 100 mPa·s or higher, still more preferably 1000 mPa·s or higher. Moreover, the upper limit of the viscosity is not particularly limited, but the viscosity is usually lower than 10000 mPa·s. Here, the viscosity is measured using a viscosity/viscoelasticity measuring device available from Thermo Fisher Scientific.

The ratio of the viscosity at a shear rate of 0.01 (1/s) to the viscosity at a shear rate of 10 (1/s) of the support material ink (b) at 20°C is preferably 5 or higher, more preferably 10 or higher, still more preferably 20 or higher, particularly preferably 50 or higher. This allows the support material ink (b) to have better pseudoplasticity.

The support material ink (b) can be produced by mixing the polymer and the first crosslinking factor, and optionally other components. The mixing conditions are not particularly limited.

As described above, the production method of the present invention usually includes individually discharging the model material ink (a) and the support material ink (b) using a 3D printer to form a layer and repeating this process to stack layers. As the discharged model material ink (a) and the discharged support material ink (b) are in contact with each other, the discharged first crosslinking factor alone or together with the second crosslinking factor can crosslink the photocrosslinkable polymer to fabricate an object of the model material ink (a). Here, the first crosslinking factor or the first and second crosslinking factors contained in the discharged support material ink (b) can be supplied to the discharged model material ink (a). In the production method of the present invention, in addition to the crosslinking of the photocrosslinkable polymer by the first crosslinking factor or the first and second crosslinking factors, ionic crosslinking, photocrosslinking, enzymatic crosslinking, temperature change, etc. may contribute to the crosslinking of the crosslinkable polymer.

### (Second support material ink containing second support material)

In the production method of the present invention, in conjunction with the model material ink (a) and the support material ink (b) (hereinafter also referred to as the first support material ink), a second support material ink as a support for the model material ink and the first support material ink may be discharged for the production. The second support material ink may be discharged in advance to produce a three-dimensional object (vessel or outer frame), or may be discharged in advance to produce part of a three-dimensional object (vessel or outer frame) and then discharged in conjunction with the model material ink and the first support material ink to produce the rest of the three-dimensional object. Alternatively, the entire three-dimensional object may be produced at the same time. Since the three-dimensional object (vessel or outer frame) produced from the second support material ink serves as a support for the model material ink and the first support material ink, the collapse of the model material ink and the first support material ink can be more sufficiently prevented, and a taller three-dimensional object can be produced if desired. Moreover, such a second support material ink may not contain a first crosslinking factor. Such a second support material ink may be substituted for the first support material ink to reduce the amount of the first support material ink discharged, thereby saving the use of the first crosslinking factor contained in the first support material ink. Here, the second support material ink may contain any second support material that can serve as a support for the model material ink and/or the support material ink, such as the support material used in the support material ink (b), glass, or resin. As described later, the object of the second support material ink can be removed in a similar way to the object of the first support material ink, if an appropriate material is selected. The model material ink may be partially or entirely in contact with the object formed of the second support material.

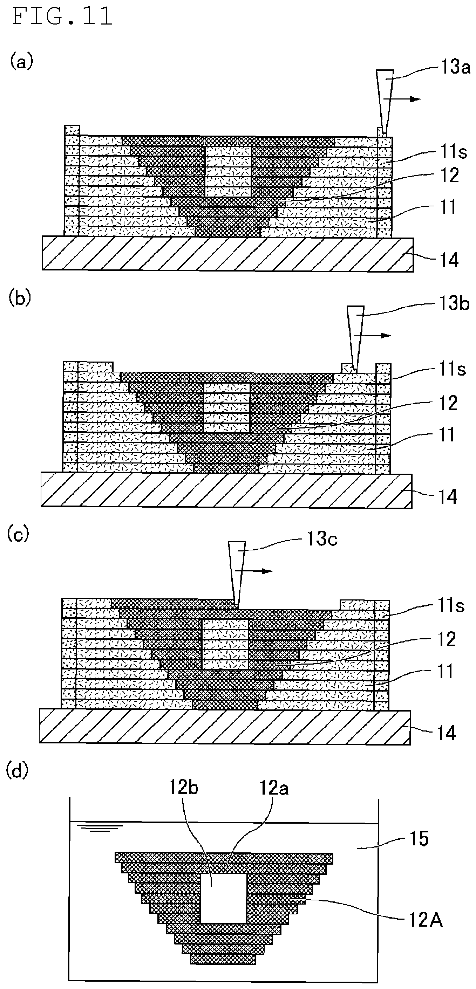

FIG. 11 shows schematic diagrams illustrating steps for producing a three-dimensional object further using a second support material ink in the method for producing a three-dimensional object of the present invention. Only the features differing from FIG. 1 are described below. FIG. 11(a) schematically shows discharge of a second support material ink 11s from a nozzle 13a of a 3D printer. FIG. 11(b) schematically shows discharge of a first support material ink 11 from a nozzle 13b of the 3D printer. FIG. 11(c) schematically shows discharge of a model material ink 12 from a nozzle 13c of the 3D printer. It should be noted that the nozzle 13a, the nozzle 13b, and the nozzle 13c may be the same nozzle but are preferably different nozzles. In FIG. 11, the second support material ink 11s is discharged, the first support material ink 11 is discharged to a location surrounded by the second support material ink 11s, and the model material ink 12 is discharged to a location surrounded by the first support material ink 11, whereby one layer is formed. This process is repeated to provide a layered structure.

As shown in FIG. 11(a) to FIG. 11(c), the discharged second support material ink 11s is in the form of a thin wall having both even inner and outer peripheries, and is in contact with and supports the discharged first support material ink 11, and also indirectly supports the discharged model material ink 12. When the second support material ink 11s used is capable of forming a hard object, the model material ink 12 and the first support material ink 11 can be more sufficiently prevented from collapsing during the gelling or other processes. It is also possible to produce a taller three-dimensional object if desired.

FIG. 11(d), as with FIG. 1(c), shows the step of immersing, after completion of the gelling of the model material ink 12, the resulting objects in a removal solution 15 to remove the objects of the first support material ink 11 and the second support material ink 11s. This step is described later.

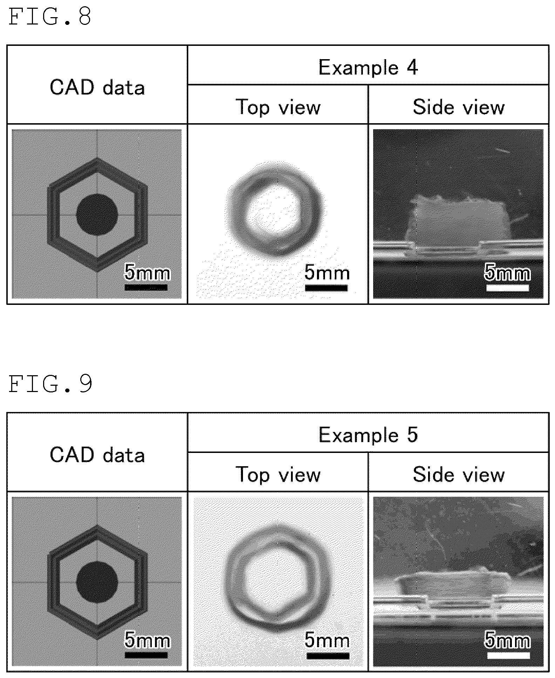

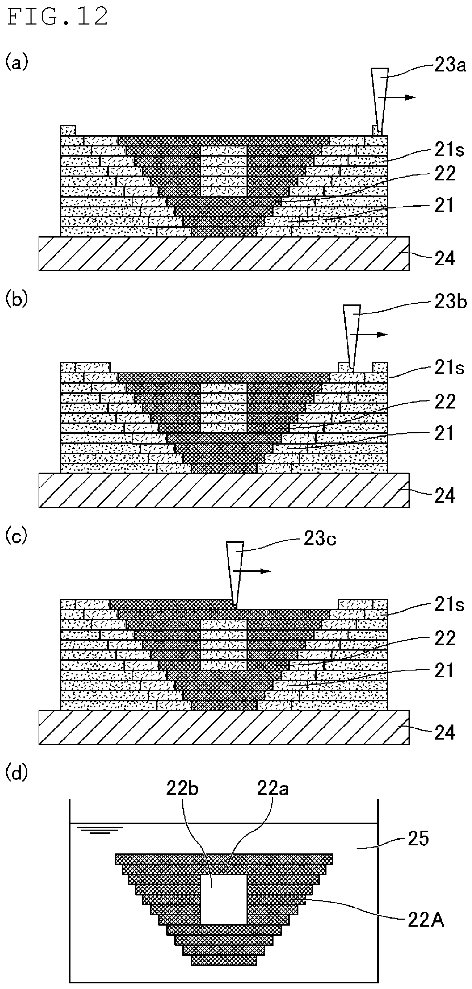

FIG. 12 is the same as the schematic diagrams shown in FIG. 11, except that the area in which a first support material ink 21 and a second support material ink 21s are discharged is changed as shown in FIG. 8. Only the features differing from FIG. 11 are described below. In FIG. 12, the second support material ink is discharged such that the inner periphery is in the form of downwardly expanding steps. Compared to FIG. 11, the second support material ink is substituted for part of the first support material ink. When the second support material ink 21s used is capable of forming a hard object and contains no first crosslinking factor, the model material ink 22 and the first support material ink 21 can be more sufficiently prevented from collapsing during the gelling or other processes, while also reducing the amount of the first support material ink 21 discharged, thereby saving the use of the first crosslinking factor.

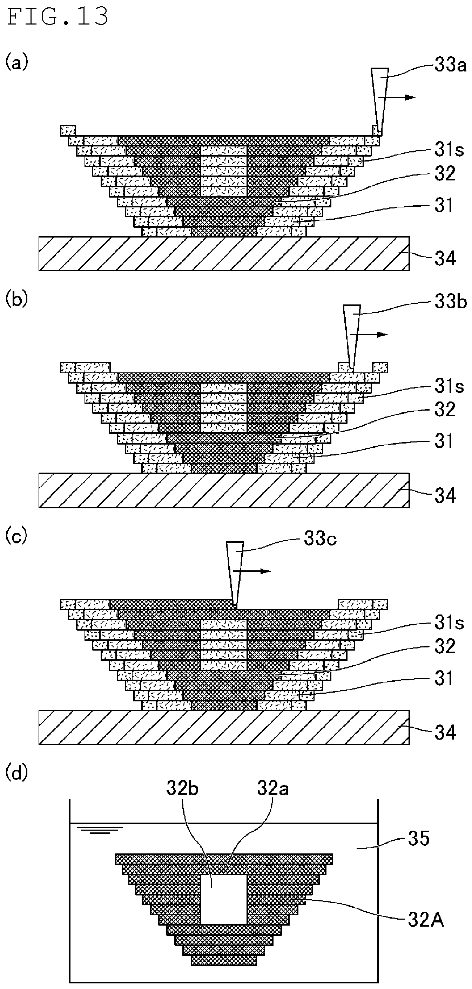

FIG. 13 is the same as the schematic diagrams shown in FIG. 12, except that the area in which a second support material ink 31s is discharged is changed as shown in FIG. 13. Only the features differing from FIG. 12 are described below. In FIG. 13, the second support material ink is discharged such that the outer periphery is in the form of upwardly expanding steps to match the shapes of the discharged model material ink 32 and the discharged first support material ink 31. Compared to FIG. 12, the amount of the second support material ink discharged can also be reduced.

### <Step of photocuring discharged photocrosslinkable polymer>

In the photocuring step, the first crosslinking factor or the first and second crosslinking factors migrated from the support material ink to the model material ink layer may be reacted with the photocrosslinkable polymer by irradiation with light to cure it. Examples of the light include visible light, ultraviolet light, X-rays, and electron beams.

### <Step of removing object of support material ink>

The removal step is not particularly limited as long as it can remove the object of the support material ink (b) to give the object of the model material ink (a). For example, the object of the support material ink (b) is preferably immersed and/or washed in a solution for removing the object of the support material ink (b). The removal step is preferably performed under mild conditions to reduce the impact on the object (three-dimensional object) of the model material ink (a). For example, the removal step is preferably performed at a temperature of 10°C to 40°C. Moreover, from the perspective of enzymatic activity, the pH at 20°C of the removal solution is preferably 2 to 10, more preferably 5 to 9. It should be noted that the object of the support material ink is made of the support material (polymer) and other components remaining after the first crosslinking factor is supplied from the support material ink to the model material ink.

When a second support material ink as described above is further used in conjunction with the support material ink (b), the object of the support material ink (b) and the object of the second support material ink may be removed by the respective different methods, but preferably the object of the second support material ink is also removed along with the object of the support material ink (b) by the above removal step.

When the support material is a water-soluble polymer or water-dispersible polymer, the removal solution used may be water or an aqueous solution. Moreover, when the water-soluble polymer or water-dispersible polymer is capable of forming an aqueous polymer gel that can interact with an ionic compound to aggregate or reduce its viscosity, an aqueous solution of the ionic compound can be particularly suitably used as the removal solution. The interaction of the water-soluble polymer or water-dispersible polymer with the ionic compound is not particularly limited as long as the aqueous polymer gel is allowed to aggregate or reduce its viscosity as a result of contact of the water-soluble polymer or water-dispersible polymer with the ionic compound. An example of such an interaction is a reaction (chemical reaction) with the ionic compound. When the aqueous polymer gel is degradable by enzymatic treatment, a degrading enzyme can be used, and the object of the support material ink can be removed by using a culture medium, a buffer, physiological saline, water, etc. after the enzymatic treatment. When the support material is capable of undergoing a phase transition depending on the temperature, the phase transition can be induced by heating or cooling, and the object of the support material ink can be removed by using water or an aqueous solution after the phase transition.

Examples of the ionic compound include multivalent metal salts of calcium, zinc, magnesium, barium, strontium, copper, iron, aluminum, cobalt, etc. Preferred among these are calcium chloride, calcium hydroxide, calcium carbonate, and calcium lactate. More preferred is calcium chloride.

The concentration of the ionic compound in the removal solution is preferably 1 mM or higher, more preferably 10 mM or higher. The concentration is preferably 2 M or lower, more preferably 0.2 M or lower.

Non-limiting examples of the degrading enzyme include cellulase, amylase, dextranase, carrageenase, alginate lyase, hyaluronidase, chitinase, and chitosanase.

The concentration of the degrading enzyme in the removal solution is preferably 0.1 to 5% by weight, more preferably 0.1 to 1% by weight.

### <Other steps>

The production method of the present invention may include, after the above-described step of individually discharging the model material ink and the support material ink but before the above-described step of removing the object of the support material ink, allowing the discharged model material ink and the discharged support material ink to stand so that the model material can sufficiently gel.

The three-dimensional object produced by the method of the present invention can be, for example, a complex-shaped three-dimensional object made of a soft material. In particular, it can be suitably used as an artificial organ or the like in the field of regenerative medicine. Here, the three-dimensional object may have any shape, but the three-dimensional object is suitable for a shape with a bridge and/or a hole. The dimensions of the three-dimensional object can be appropriately set.

### <<Ink set for producing three-dimensional object>>

The present invention includes (a) a model material ink containing a photocrosslinkable polymer and (b) a support material ink containing a support material and a first crosslinking factor. The photocrosslinkable polymer, support material, first crosslinking factor, and other components are as described above. The three-dimensional object according to the present invention can be suitably produced from the ink set for producing a three-dimensional object of the present invention.

### EXAMPLES

In the following, the present invention is described with reference to examples although the present invention is not limited to the following examples. Hereinafter, "parts" or "%" means "parts by weight" or "% by weight", respectively, unless otherwise specified.

### Production Example 1 (Production of model material ink 1)

Ten grams of sodium hyaluronate (available from FUJIMEDICA Corporation) were dissolved in 1 L of 0.1 M 2-morpholinoethanesulfonic acid monohydrate (MES) buffer (pH 5.8). A solution of 0.56 g of tyramine hydrochloride, 1.43 g of water-soluble carbodiimide (WSCD·HCl), and 0.43 g of N-hydroxysuccinimide (NHS) dissolved in 10 mL of purified water was added, followed by stirring at room temperature for 22 hours. The resulting reaction mixture was ultrafiltered and subjected to vacuum freeze drying to prepare HYA-Ph (phenolic hydroxy group modification percentage: 2.9 mol%, Mw: 300,000).

Twenty milligrams of the prepared HYA-Ph were weighed out and dissolved with 2.0 mL of phosphate-buffered saline (PBS). Then, 3.0 mg of tris(2,2'-bipyridyl)dichlororuthenium(II) hexahydrate (molecular weight: 640.53 (anhydrous), 748.62 (hexahydrate)) was weighed out and added to the HYA-Ph solution to prepare a model material ink 1 with a Ru²⁺ concentration of 2.0 mmol/L and a HYA-Ph concentration of 1.0 w/v%.

### Production Example 2 (Production of support material ink 1)

A 4 mL portion of PROJELLY (available from JEX Co., Ltd., high viscosity type) was dispensed, and 9.524 mg of sodium peroxodisulfate (SPS, MW 238.10) was added to prepare a support material ink 1 containing 10 mM SPS.

### Production Example 3 (Production of model material ink 2)

Twenty milligrams of the HYA-Ph prepared in Production Example 1 were weighed out and dissolved with 2.0 mL of phosphate-buffered saline (PBS). Then, 3.0 mg of tris(2,2'-bipyridyl)dichlororuthenium(II) hexahydrate (molecular weight: 640.53 (anhydrous), 748.62 (hexahydrate)) and 4.8 mg of sodium peroxodisulfate (SPS, MW 238.10) were weighed out and added to the HYA-Ph solution to prepare a model material ink 2 with a Ru²⁺ concentration of 2.0 mmol/L, a SPS concentration of 10.0 mmol/L, and a HYA-Ph concentration of 1.0 w/v%.

### Production Example 4 (Production of model material ink 3)

A solution prepared by dispersing gelatin (Sigma) in phosphate-buffered saline to a concentration of 10 (w/v)% was heated to 50°C to dissolve the gelatin. To the solution was added methacrylic anhydride in an amount of 60% by mass relative to the mass of the gelatin, followed by stirring for one hour. The resulting solution was placed in a dialysis membrane (molecular weight cut-off: 10,000 to 20,000) and dialyzed in purified water at 40°C for three days. After completion of the dialysis, the solution was subjected to vacuum freeze drying to obtain gelatin methacrylate.

One hundred milligrams of the gelatin methacrylate were weighed out and dissolved with 5 mg of fluorescent particles (fluorescent powder, product number: MB-8502, available from Matsuno Industry, Co., Ltd.) and 2.0 mL of phosphate-buffered saline (PBS) to prepare a model material ink 3 with a gelatin methacrylate concentration of 5 w/v%.

### Production Example 5 (Production of support material ink 2)

A 4 mL portion of PROJELLY (high viscosity type, available from JEX Co., Ltd.) was dispensed, and 40 mg of lithium phenyl-2,4,6-trimethylbenzoylphosphinate (LAP) was added to prepare a support material ink 2 containing 1 w/v% LAP.

### Production Example 6 (Production of support material ink 3)

A support material ink 3 containing no LAP was prepared as in Production Example 5, except that LAP was not added.

### Production Example 7 (Production of model material ink 4)

One hundred milligrams of the gelatin methacrylate were weighed out and dissolved with 5 mg of fluorescent particles (fluorescent powder, product number: MB-8502, available from Matsuno Industry, Co., Ltd.) and 2.0 mL of phosphate-buffered saline (PBS), followed by adding LAP to a concentration of 1 w/v% to prepare a model material ink 4 with a gelatin methacrylate concentration of 5 w/v%.

### Production Example 8 (Production of model material ink 5)

A solution of modified polyvinyl alcohol (AF-17 available from Japan Vam & Poval Co., Ltd.) dissolved at 3.3% (w/v) in 0.1 M 2-morpholinoethanesulfonic acid monohydrate (MES) buffer (pH 6.0) was heated at 120°C for 15 minutes. The solution was cooled to room temperature, and then tyramine hydrochloride, water-soluble carbodiimide (WSCD·HCl), and N-hydroxysuccinimide (NHS) were added at 3.3%, 3.3%, and 1.0% (w/v), respectively, followed by stirring at 40°C for 20 hours. The resulting reaction solution was added to ethanol for precipitation. The precipitates were then washed with a 90% ethanol aqueous solution and ethanol and dried under reduced pressure to prepare PVA-Ph (phenolic hydroxy group modification percentage: 2.4 × 10⁻⁴ mol/g). A model material ink 5 was prepared as in Production Example 1, such that the concentration of the prepared PVA-Ph was 5.0 w/v% (g/100 mL).

### Production Example 9 (Production of model material ink 6)

Ten grams of gelatin (available from Jellice Co., Ltd.) were dissolved in 500 mL of 0.05 M 2-morpholinoethanesulfonic acid monohydrate (MES) buffer (pH 6.0). A solution of 1.84 g of tyramine hydrochloride, 1.85 g of water-soluble carbodiimide (WSCD·HCl), and 0.57 g of N-hydroxysuccinimide (NHS) dissolved in 5 mL of purified water was further added, followed by stirring at room temperature for 20 hours. The resulting reaction mixture was ultrafiltered and subjected to vacuum freeze drying to prepare Gela-Ph (phenolic hydroxy group modification percentage: 2.7 × 10⁻⁴ mol/g). A model material ink 6 was prepared as in Production Example 1, such that the concentration of the prepared Gela-Ph was 4.0 w/v% (g/100 mL).

### Production Example 10 (Production of model material ink 7)

Ten grams of sodium alginate (available from maikon no kohara Corporation) were dissolved in 600 mL of 0.05 M 2-morpholinoethanesulfonic acid monohydrate (MES) buffer (pH 6.0). A solution of 0.57 g of tyramine hydrochloride, 2.90 g of water-soluble carbodiimide (WSCD·HCl), and 0.87 g of N-hydroxysuccinimide (NHS) dissolved in 10 mL of purified water was further added, followed by stirring at room temperature for 19 hours. The resulting reaction mixture was ultrafiltered and subjected to vacuum freeze drying to prepare Alg-Ph (phenolic hydroxy group modification percentage: 3.1 mol%). A model material ink 7 was prepared as in Production Example 1, such that the concentration of the prepared Alg-Ph was 2.0 w/v% (g/100 mL).

### Example 1

The model material ink 1 prepared in Production Example 1 and the support material ink 1 prepared in Production Example 2 were individually discharged onto a substrate while being exposed to light to form a layer using a 3D printer (product name: BIO X available from Cellink). This process was repeated to stack layers, thereby producing a hexagonal prism with a thickness of 1 mm, a height of 5 mm, and a side length of 6 mm as a three-dimensional object. The wavelength and intensity of the light used for the exposure were 450 nm and about 60,000 lux, respectively.

The resulting objects were immersed in a calcium chloride solution (concentration 100 mM) to remove the objects of the support material ink.

### Comparative Example 1

A three-dimensional object was produced as in Example 1, except that the model material ink 2 prepared in Production Example 3 was used and no support material ink was used.

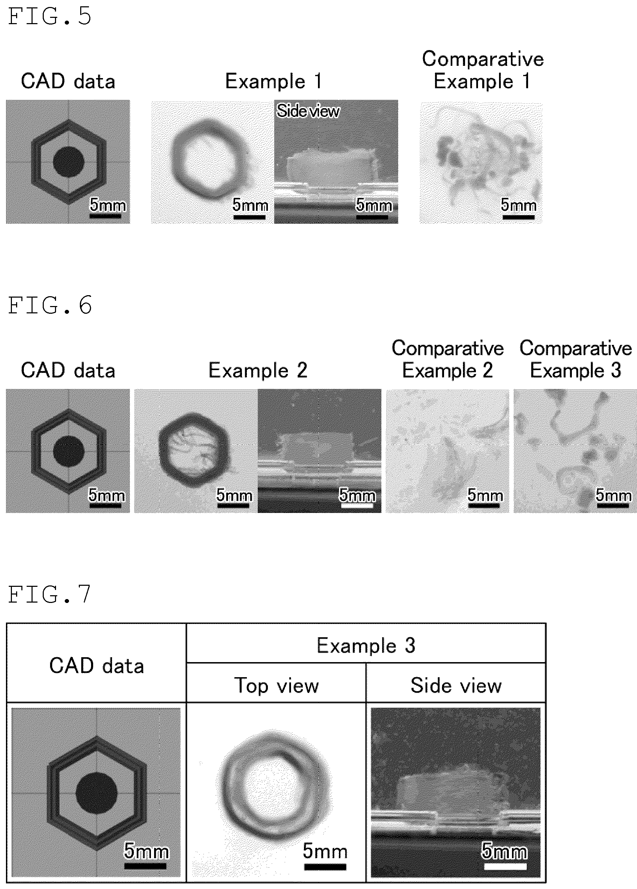

FIG. 5 shows photographs of the produced three-dimensional objects. The use of a support material ink containing a crosslinking factor enabled the production of a three-dimensional object faithful to the original data, as seen in the photographs of Example 1, even though the concentration was as low as 1 w/v%, which is inappropriate for three-dimensional objects. In contrast, when the model material ink containing a first crosslinking factor was used, but no support material was used, the top of the object became uneven, so that the solution could not adhere well to the top, resulting in no structure, as seen in the photograph of Comparative Example 1. For the solution with no support material, the gelling time itself was quite short, resulting in something like a collapsed linear structure.

### Example 2

The model material ink 3 prepared in Production Example 4 and the support material ink 2 prepared in Production Example 5 were individually discharged onto a substrate while being exposed to light to form a layer using a 3D printer (product name: BIO X available from Cellink). This process was repeated to stack layers, thereby producing a hexagonal prism with a thickness of 1 mm, a height of 5 mm, and a side length of 6 mm as a three-dimensional object. The wavelength and intensity of the light used for the exposure were 450 nm and about 60,000 lux, respectively.

The resulting objects were immersed in a calcium chloride solution (concentration 100 mM) to remove the objects of the support material ink.

### Comparative Example 2

A three-dimensional object was produced as in Example 2, except that the support material ink 3 containing no LAP prepared in Production Example 6 was used as a support material ink.

### Comparative Example 3

A three-dimensional object was produced as in Example 2, except that no support material ink was used and the model material ink 4 containing LAP prepared in Production Example 7 was used.

FIG. 6 shows photographs of the produced three-dimensional objects. The use of a support material ink containing a crosslinking factor enabled the production of a three-dimensional object faithful to the original data, as seen in the photographs of Example 2, even though the concentration was as low as 5 w/v%, which is inappropriate for three-dimensional objects. In contrast, in Comparative Example 2, in which both inks did not contain LAP, no three-dimensional structure could be obtained because polymerization did not start. In Comparative Example 3, in which the model material ink contained LAP but no support material ink was used, the object layers could not be stacked well due to the low viscosity, and the discharged solution clung to the nozzle tip and could not adhere well to the object. This is because the 5 w/v% gelatin methacrylate solution had a low viscosity and the resulting hydrogel was fragile, causing the top of the object to be quite uneven, and also because the solution was gelled by exposure to light immediately after it was discharged. This problem could not be solved by reducing the amount of light.

The above results demonstrate that when producing complex-shaped objects made of soft materials, the production method of the present invention can be used to provide three-dimensional objects with good fabrication accuracy.

### Example 3

A three-dimensional object was produced as in Example 1, except that the ink 5 prepared in Production Example 8 was used as a model material ink and the SPS concentration of the support material ink 1 prepared in Production Example 2 was changed to 8 mM.

### Example 4

A three-dimensional object was produced as in Example 1, except that the ink 6 prepared in Production Example 9 was used as a model material ink and the SPS concentration of the support material ink 1 prepared in Production Example 2 was changed to 8 mM.

### Example 5

A three-dimensional object was produced as in Example 1, except that the ink 7 prepared in Production Example 10 was used as a model material ink and the SPS concentration of the support material ink 1 prepared in Production Example 2 was changed to 8 mM.

As shown in FIG. 7 to FIG. 9, in Example 3 using the model material ink 5 containing modified polyvinyl alcohol, Example 4 using the model material ink 6 containing gelatin, and Example 5 using the model material ink 7 containing alginic acid, objects with very good fabrication accuracy could also be produced as in Example 1 using the model material ink containing hyaluronic acid.

### Example 6

Mouse fibroblast cells 10T1/2 were dispersed at 1 × 10⁵ cells/mL in the model material ink 1 prepared in Production Example 1, and a three-dimensional object (a hexagonal prism with a thickness of 1 mm, a height of 1 mm, and a side length of 6 mm) was produced as in Example 1 using the obtained cell-containing model material ink and the support material ink prepared in Production Example 2.

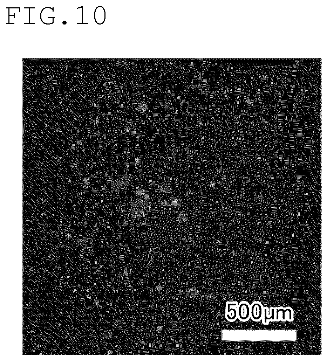

Immediately after the fabrication, the cell-containing object was immersed in phosphate-buffered saline (pH 7.4) containing a live cell staining reagent Calcein-AM and a dead cell staining reagent PI at 1 µg/mL each for 10 minutes for staining. FIG. 10 shows a photograph of the results. The cells maintained a high survival rate of 85%.

### REFERENCE SIGNS LIST

1, 11, 21, 31: support material ink
2, 12, 22, 32: model material ink
2A, 12A, 22A, 32A: three-dimensional object
2a, 12a, 22a, 32a: bridge
2b, 12b, 22b, 32b: hole
3a, 3b, 13a, 13b, 13c, 23a, 23b, 23c, 33a, 33b, 33c: nozzle
4, 14, 24, 34: substrate
5, 15, 25, 35: removal solution
11, 21, 31: first support material ink
11s, 21s, 31s: second support material ink

## Claims

1. A method for producing a three-dimensional object, comprising:
individually discharging (a) a model material ink containing a photocrosslinkable polymer and (b) a support material ink containing a support material and a first crosslinking factor;
photocuring the discharged photocrosslinkable polymer; and
removing an object of the support material ink.

2. The method for producing a three-dimensional object according to claim 1,
wherein the model material ink (a) further contains a second crosslinking factor.

3. The method for producing a three-dimensional object according to claim 1 or 2,
wherein the model material ink (a) is substantially free of photopolymerization initiators.

4. The method for producing a three-dimensional object according to any one of claims 1 to 3,
wherein the support material ink (b) is substantially free of photocrosslinkable polymers or photocrosslinkable monomers.

5. The method for producing a three-dimensional object according to any one of claims 1 to 4,
wherein the support material ink (b) further contains a second crosslinking factor.

6. The method for producing a three-dimensional object according to any one of claims 1 to 5,
wherein the support material is a water-soluble polymer or a water-dispersible polymer.

7. The method for producing a three-dimensional object according to claim 6,
wherein the water-soluble polymer or water-dispersible polymer is capable of forming an aqueous gel that can interact with an ionic compound to aggregate or reduce its viscosity, and
the step of removing an object of the support material ink comprises removing the object of the support material ink (b) by interaction with the ionic compound.

8. An ink set for producing a three-dimensional object, the ink set comprising:
(a) a model material ink containing a photocrosslinkable polymer; and
(b) a support material ink containing a support material and a first crosslinking factor.

9. The ink set for producing a three-dimensional object according to claim 8,
wherein the support material ink (b) contains a water-soluble polymer or water-dispersible polymer which is capable of forming an aqueous gel that can interact with an ionic compound to aggregate or reduce its viscosity.
